# EUROPÄISCHE PATENTSCHRIFT

(11) **EP 3 623 652 B1**
(45) Veröffentlichungstag und Bekanntmachung des Hinweises auf die Patenterteilung: **16.12.2020**
(21) Anmeldenummer: 19195488.2
(22) Anmeldetag: 05.09.2019
(51) Int. Cl.: F16C 11/06

(54) **DICHTUNGSBALG UND DICHTUNGSANORDNUNG, DIE DEN DICHTUNGSBALG UMFASST**
SEALING BELLOWS AND SEALING ARRANGEMENT COMPRISING THE SEALING BELLOWS
SOUFFLET D'ÉTANCHÉITÉ ET JOINT D'ÉTANCHÉITÉ COMPORTANT LE SOUFFLET D'ÉTANCHÉITÉ

(30) Priorität: 14.09.2018 DE 102018122495
(43) Veröffentlichungstag der Anmeldung: 18.03.2020
(73) Patentinhaber: Carl Freudenberg KG, 69469 Weinheim (DE)
(72) Erfinder: Knorr, Rainer, 10557 Berlin (DE); Hosen, Tatsuro, 14169 Berlin (DE)

(56) Entgegenhaltungen:
- WO-A2-02/097186
- WO-A2-2010/054171
- DE-A1- 2 436 062
- DE-A1- 3 600 444
- DE-A1- 19 830 184
- DE-C1- 4 115 446
- GB-A- 968 053

## Beschreibung

### Technisches Gebiet

Die Erfindung betrifft einen Dichtungsbalg aus einem gummielastischen Werkstoff, umfassend eine erste und eine zweite Stirnseite sowie einen Mantel mit einer Mittelachse, wobei der Mantel in axialer Richtung zwischen den Stirnseiten angeordnet ist und zumindest ein Torsionsausgleichselement umfasst, zur im Wesentlichen torsionsspannungsfreien Aufnahme von in den Dichtungsbalg eingeleiteten Torsionsbewegungen und wobei die erste Stirnseite als erste statische Dichtung und die zweite Stirnseite als zweite statische Dichtung ausgebildet ist.
Außerdem betrifft die Erfindung eine Dichtungsanordnung, die einen solchen Dichtungsbalg umfasst.

### Stand der Technik

Ein solcher Dichtungsbalg, der einen Bestandteil einer Dichtungsanordnung bildet, ist aus der DE 24 36 062 A1 bekannt.

Der vorbekannte Dichtungsbalg ist vorgesehen, um größere gegensinnig gerichtete Torsionsbewegungen und/oder axiale Relativbewegungen und/oder Winkelbewegungen - jeweils zwischen den Stirnseiten des Dichtungsbalgs - ausführen zu können, ohne beschädigt oder zerstört zu werden.
Das Torsionsausgleichselement des vorbekannten Dichtungsbalgs umfasst erste Falten, die sich in einer Draufsicht auf den Dichtungsbalg in einem Winkel zur Mittelachse, im Wesentlichen diagonal zwischen den Stirnseiten des Dichtungsbalgs, erstrecken.
Axiale Bewegungen der Stirnseiten des Dichtungsbalgs relativ zueinander werden durch zweite Falten aufgenommen, die in Umfangsrichtung in sich geschlossen ausgebildet sind, ähnlich wie bei einem herkömmlichen Faltenbalg.
Nähere Angaben zum Werkstoff, aus dem der Dichtungsbalg besteht, sind nicht gemacht.

Dichtungsbälge aus elastomeren Werkstoffen dichten gegenüber einem Kugelzapfen dynamisch ab.

Aus der WO 02/097186 A2 ist ein Textilmaterial mit einem metallischen Erscheinungsbild bekannt, wobei eine metallische Lage, die beispielsweise aus Kupfer, Silber oder Gold besteht, durch elektrolytische Abscheidung auf ein textiles Basismaterial aufgebracht wird.
Das Textilmaterial kann als ornamentale Dekoration ausgebildet sein und beispielsweise einen Bestandteil eines Schmuckstücks, eines Halsbandes oder einer Haarklammer bilden.
Als besonders vorteilhaft wird hervorgehoben, dass die metallischen Lagen einander mit Abstand benachbart zugeordnet sind. Die metallischen Lagen sind durch das textile Basismaterial deshalb flexibel miteinander verbunden. Außerdem ist offenbart, dass das Textilmaterial auch industriel verwendet werden kann, wenn ein flexibler Überzug gefordert wird, beispielsweise ein Balg, um Hydraulikteile vor einer Beaufschlagung mit Verunreinigungen zu schützen.
Das Textilmaterial weist eine Vielzahl benachbart zueinander angeordneter Falten auf, die sich alle ohne Versatz parallel zueinander erstrecken.

Aus der DE 198 30 184 A1 ist ein Faltenbalg mit gerade verlaufenden Biegelinien bekannt, der elastische Werkstoffe an den Biegestellen und unelastische Werkstoffe auf den Faltenseiten umfasst. Der Faltenbalg weist eine Vielzahl von Falten auf, die aus einer Vielzahl von Dreiecken und Vierecken zusammengesetzt sind, wobei diese Dreiecke an den Ecken von Polygonen befestigt sind, die den Faltengrund bilden. Die anderen Dreieckspunkte sind mit Nachbardreiecken verbunden, wodurch Drei- und Vierecke gebildet werden. Der Faltenbalg faltet durch Zug- oder Druckkräfte oder durch Volumen- oder Druckänderungen der im Inneren des Faltenbalgs befindlichen gasförmigen oder flüssigen Medien bzw. durch Druckänderungen in den Faltenbalg umgebenden äußeren Medien.

Aus der DE 41 15 446 C1 ist ein Faltenbalg aus einem elastomeren Werkstoff bekannt. Der Faltenbalg weist zu seiner Befestigung ein- oder beidseitig ein starres Anschlußteil auf, auf das der betreffende Befestigungsbund unter radialer Aufweitung aufgeschoben und formschlüssig durch seine so erzeugte Vorspannung gehalten ist.

Aus der WO 2010/054171 A2 ist ein Dichtungsbalg bekannt, der in einer Dichtungsanordnung zur Anwendung gelangt. Die Dichtungsanordnung umfasst neben dem Dichtungsbalg ein erstes und ein zweites Maschinenelement, die mittels eines Gelenks schwenkbeweglich miteinander verbunden sind, wobei eine erste Stirnseite des Dichtungsbalgs das erste Maschinenelement mit einer ersten Dichtung und eine zweite Stirnseite des Dichtungsbalgs das zweite Maschinenelement mit einer zweiten Dichtung dichtend umschließt.

Aus der GB 968 053 A ist ein Faltenbalg bekannt, der folienverstärkt ist und im Bereich seiner Falten eine größere Flexibilität aufweist, als in den daran angrenzend benachbarten Bereichen. Beispielsweise kann es vorgesehen sein, dass die Verstärkungsfolie entlang der Falten perforiert ist.

Aus der DE 36 00 444 A1 ist ein Balg bekannt, der stirnseitig beiderseits mit Dichtungen an angrenzenden Maschinenelementen dichtend festgelegt ist. Der Balg ist aus einem thermoplastischen Harz mit Hilfe des Blasformens hergestellt.

### Darstellung der Erfindung

Der Erfindung liegt die Aufgabe zu Grunde, einen Dichtungsbalg der eingangs genannten Art derart weiterzuentwickeln, dass dieser verbesserte Gebrauchseigenschaften während einer langen Gebrauchsdauer aufweist und prozesssicher, schnell, einfach und kostengünstig herstellbar ist. Der Dichtungsbalg soll trotz kompakter Abmessungen große Verdrehwinkel der beiden Stirnseiten des Dichtungsbalgs relativ zueinander praktisch spannungsfrei aufnehmen können. Gleiches soll für die Dichtungsanordnung gelten.

Diese Aufgabe wird erfindungsgemäß durch einen Dichtungsbalg mit den Merkmalen von Anspruch 1 und eine Dichtungsanordnung mit den Merkmalen von Anspruch 5 gelöst. Auf vorteilhafte Ausgestaltungen nehmen die auf die Ansprüche 1 und 5 direkt oder indirekt rückbezogenen Ansprüche Bezug.

Zur Lösung der Aufgabe ist es vorgesehen, dass der Dichtungsbalg aus einem TPE-Werkstoff besteht, dass das Torsionsausgleichselement eine Origami-Struktur umfasst, mit Faltelementen, die durch Knicke relativbeweglich miteinander verbunden sind, dass die Faltelemente bei in den Dichtungsbalg eingeleiteten Torsionsbewegungen in Umfangsrichtung des Mantels im Wesentlichen spannungsfrei zueinander beweglich sind, dass die Origami-Struktur dreidimensionale Grundformen mit den Faltelementen umfasst, dass jede der Grundformen als eine konkave hexagonale Pyramide ausgebildet ist, deren Scheitelpunkt in Richtung der Mittelachse des Dichtungsbalgs angeordnet ist, dass die Grundformen in einer gedachten ersten Radialebene des Mantels und in Umfangsrichtung benachbart zueinander angeordnet sind und dass axial benachbart zur gedachten ersten Radialebene des Mantels eine gedachte zweiten Radialebene des Mantels angeordnet ist, in der weitere dreidimensionale Grundformen in Umfangsrichtung benachbart zueinander angeordnet sind und dass die Grundformen in der ersten und der zweiten gedachten Radialebene, in Umfangsrichtung betrachtet, jeweils um eine halbe Grundform versetzt zueinander angeordnet sind.

Thermoplastische Elastomere (TPE) sind Werkstoffe, die gummielastische Eigenschaften aufweisen und deshalb zur Herstellung von Dichtungsbälgen eigentlich besonders gut geeignet sind. TPE-Werkstoffe lassen sich in kurzen Zykluszeiten verarbeiten und können zum Beispiel extrudiert, spritzgeformt oder blasgeformt werden.

Ein genereller Nachteil von TPE-Werkstoffen besteht jedoch darin, dass TPE-Werkstoffe nicht die günstigen und auch erforderlichen Eigenschaften von elastomeren Werkstoff haben, um über Wülste oder Dichtlippen dynamisch abdichten zu können. Bisher wurden TPE-Werkstoffe zur Herstellung von Dichtungsbälgen deshalb nicht verwendet.

Sollen dennoch TPE-Werkstoffe für die Herstellung von Dichtungsbälgen zur Anwendung gelangen, ist es hinsichtlich guter Gebrauchseigenschaften während einer langen Gebrauchsdauer notwendig, die beiden Stirnseiten als statische Dichtungen auszubilden. Werden die beiden Stirnseiten jedoch als statische Dichtungen ausgebildet, muss außerdem ein Torsionsausgleichselement vorgesehen sein, um die während der bestimmungsgemäßen Verwendung des Dichtungsbalgs auftretenden Torsionsspannungen im Torsionsausgleichselement aufnehmen zu können oder zumindest auf ein für eine lange Gebrauchsdauer unkritisches Niveau abzumildern.

Die Kombination aus den zuvor beschriebenen statischen Dichtungen stirnseitig beiderseits des Dichtungsbalgs, dem Torsionsausgleichselement und dem TPE-Werkstoff sorgt dafür, dass der Dichtungsbalg nicht nur gute Gebrauchseigenschaften während einer langen Gebrauchsdauer aufweist, sondern auch prozesssicher, schnell, einfach und kostengünstig herstellbar ist. Eine besonders wirkungsvolle Aufnahme von Torsionsspannungen im Torsionsausgleichselement wird erreicht, wenn das Torsionsausgleichselement eine Origami-Struktur umfasst, mit Faltelementen, die durch Knicke relativbeweglich miteinander verbunden sind, wobei die Faltelemente bei in den Dichtungsbalg eingeleiteten Torsionsbewegungen in Umfangsrichtung des Mantels im Wesentlichen spannungsfrei zueinander beweglich sind. Eine solche Origami-Struktur ist von Vorteil, weil sie kompakte Abmessungen aufweist und trotz ihrer kompakten Abmessungen große Verdrehwinkel der beiden Stirnseiten des Dichtungsbalgs relativ zueinander praktisch spannungsfrei aufzunehmen vermag.

Die Origami-Struktur umfasst dreidimensionale Grundformen mit den Faltelementen, wobei jede Grundform als eine konkave hexagonale Pyramide ausgebildet ist, deren Scheitelpunkt in Richtung der Mittelachse des Dichtungsbalgs angeordnet ist und wobei die Grundformen in einer gedachten ersten Radialebene des Mantels und in Umfangsrichtung benachbart zueinander angeordnet sind. Im Gegensatz zu anderen Grundformen sind konkave hexagonale Pyramiden besonders gut geeignet, Torsionsbewegungen der beiden Stirnseiten relativ zueinander in sich aufzunehmen.

Sollen größere Verdrehwinkel der beiden Stirnseiten des Dichtungsbalgs relativ zueinander durch die Origami-Struktur aufgenommen werden, ist von Vorteil, dass axial benachbart zur gedachten ersten Radialebene des Mantels eine gedachte zweite Radialebene des Mantels angeordnet ist, in der weitere dreidimensionale Grundformen in Umfangsrichtung benachbart zueinander angeordnet sind, wobei die Grundformen in der ersten und der zweiten gedachten Radialebene, in Umfangsrichtung betrachtet, jeweils um eine halbe Grundform versetzt zueinander angeordnet sind. Durch die versetzte Anordnung der Grundformen in den jeweiligen Radialebenen um eine halbe Grundform, sind die Abmessungen des Dichtungsbalgs in axialer Richtung minimiert. Axial benachbarte Grundformen aus den beiden Radialebenen überlappen sich gegenseitig in axialer Richtung.
Trotz der Möglichkeit, große Torsionswinkel der Stirnseiten relativ zueinander aufzunehmen, hat die gesamte Origami-Struktur sehr kompakte Abmessungen in axialer Richtung.

Bevorzugt kann es vorgesehen sein, dass jede Grundform gemäß einer Faltbedingung (A bis B) ≈ (B bis C) < (B bis D) gefaltet ist, wobei (A bis B) die axiale Breite der Pyramide, (B bis C) die halbe Erstreckung der Pyramide am Außenumfang des Dichtungsbalgs und (B bis D) die Tiefe der Pyramide in Richtung der Mittelachse vom Außenumfang des Dichtungsbalgs bis zum Scheitelpunkt der Pyramide ist und dass der Mantel einen Faltbereich ± β aufweist, wobei β ein maximaler Torsionswinkel in Umfangsrichtung, ausgehend von der herstellungsbedingten Geometrie des Dichtungsbalgs im unverformten Zustand, ist. Diese Faltbedingung beschreibt die Grundform in Gestalt einer konkaven hexagonalen Pyramide.

Der Faltbereich ± β beträgt bevorzugt -40° bis +40°. Ein solcher Faltbereich ist für die meisten Anwendungsfälle im Bereich Lenkung/Fahrwerk von Kraftfahrzeugen ausreichend und mit den zuvor beschriebenen, in den beiden gedachten Radialebenen angeordneten Grundformen, gut erreichbar.

Der Mantel kann zusätzlich zum Torsionsausgleichselement zumindest eine umfangsseitig umlaufende und in sich geschlossen ausgebildete Falte aufweisen, wobei das Torsionsausgleichselement und die Falte in axialer Richtung unmittelbar benachbart zueinander angeordnet sind. Hierbei ist von Vorteil, dass der Dichtungsbalg durch eine solche Ausgestaltung eine Funktionstrennung aufweist, mit zwei in axialer Richtung benachbart zueinander angeordneten Funktionsbereichen. Einer der Funktionsbereiche weist die Origami-Struktur auf, der andere Funktionsbereich die zumindest eine zuvor beschriebene und in Umfangsrichtung in sich geschlossene Falte. Die beiden Funktionsbereiche sind in einer funktionstechnischen Parallelschaltung angeordnet. Der Funktionsbereich mit der Origami-Struktur nimmt überwiegend Torsionsbewegungen im Wesentlichen torsionsspannungsfrei auf, der Funktionsbereich mit der Falte überwiegend Winkelbewegungen und Axialbewegungen der Stirnseiten des Dichtungsbalgs relativ zueinander.

Bedarfsweise können zwei Torsionsausgleichselemente in einem Dichtungsbalg zur Anwendung gelangen. In einem solchen Fall kann bevorzugt stirnseitig beiderseits des Funktionsbereichs mit der zumindest einen Falte jeweils ein Torsionsausgleichselement angeordnet sein. Dadurch können größere Torsionsbewegungen durch einen größeren Faltbereich ausgeglichen werden.

Außerdem betrifft die Erfindung eine Dichtungsanordnung, umfassend einen Dichtungsbalg, wie zuvor beschrieben sowie ein erstes und ein zweites Maschinenelement, die mittels eines Gelenks schwenkbeweglich zueinander angeordnet sind, wobei die erste Stirnseite des Dichtungsbalgs das erste Maschinenelement mit ihrer statischen ersten Dichtung und die zweite Stirnseite des Dichtungsbalgs das zweite Maschinenelement mit ihrer statischen zweiten Dichtung statisch dichtend umschließt.

Das Gelenk kann als Kugelzapfengelenk ausgebildet sein, umfassend einen Gelenksitz und einen Kugelzapfen, der im Gelenksitz aufgenommen ist, wobei das erste Maschinenelement durch den Gelenksitz und das zweite Maschinenelement durch den Kugelzapfen gebildet ist. Während der bestimmungsgemäßen Verwendung der Dichtungsanordnung schwenkt der Kugelzapfen im Gelenk, und die dadurch entstehenden Relativverdrehungen werden in dem Torsionsausgleichselement durch seine Origami-Struktur aufgenommen.

### Kurzbeschreibung der Zeichnung

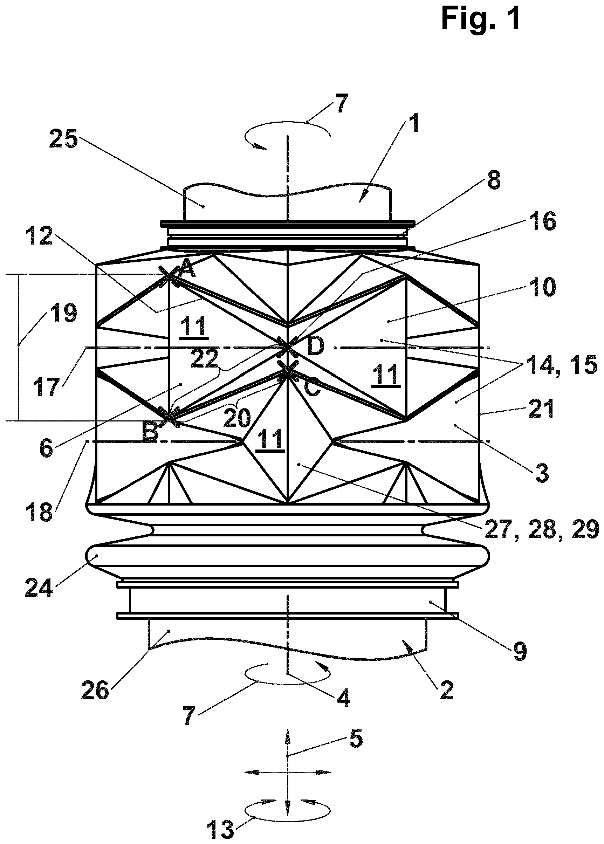

Ein Ausführungsbeispiel einer erfindungsgemäßen Dichtungsanordnung, die den erfindungsgemäßen Dichtungsbalg umfasst, ist in Figur 1 gezeigt.

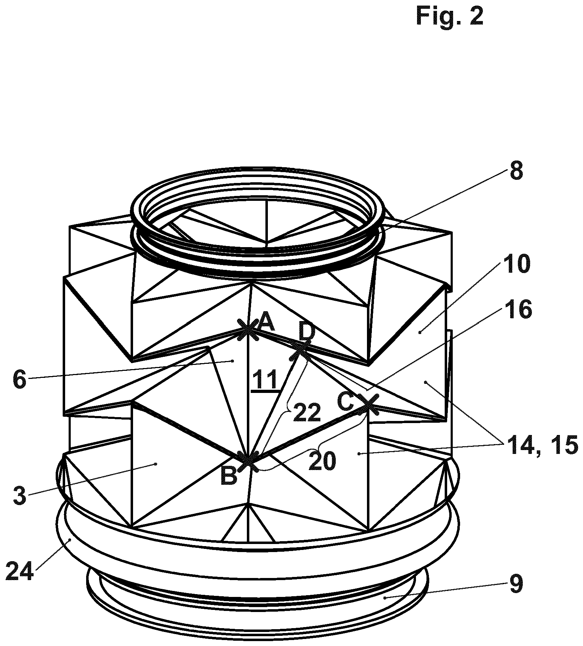

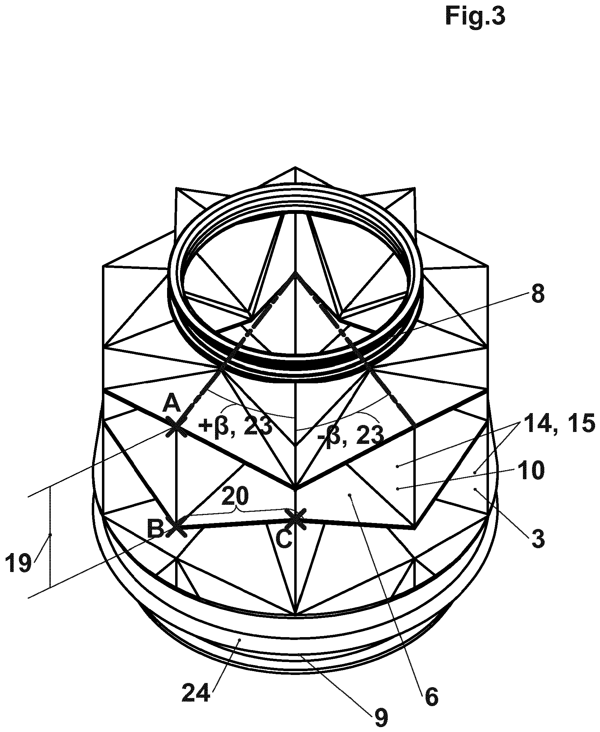

In den Figuren 2 und 3 ist der Dichtungsbalg aus Figur 1 jeweils in perspektivischer Darstellung gezeigt.

### Ausführung der Erfindung

In Figur 1 ist eine Dichtungsanordnung gezeigt, die den erfindungsgemäßen Dichtungsbalg umfasst. Die Dichtungsanordnung umfasst neben dem Dichtungsbalg ein erstes Maschinenelement 25, das als Gelenksitz 28 ausgebildet ist und ein zweites Maschinenelement 26, das durch einen im Gelenksitz 28 angeordneten Kugelzapfen 29 gebildet ist. Das erste Maschinenelement 25 und das zweite Maschinenelement 26 sind durch das Gelenk 27, das durch ein Kugelzapfengelenk gebildet ist, schwenkbeweglich und drehbeweglich miteinander verbunden. Das Gelenk 27, der Gelenkssitz 28 und der Kugelzapfen 29 sind vom Dichtungsbalg außenseitig umschlossen und deshalb in Figur 1 durch den Dichtungsbalg verdeckt.

Die erste Stirnseite 1 des Dichtungsbalgs umschließt das erste Maschinenelement 25 mit ihrer statischen ersten Dichtung 8, die zweite Stirnseite 2 des Dichtungsbalgs das zweite Maschinenelement 26 mit ihrer statischen zweiten Dichtung 9 statisch dichtend.
Der Dichtungsbalg verhindert, dass Verunreinigungen in das Gelenk 27 zwischen den beiden Maschinenelementen 25, 26 eindringen und zu Funktionsbeeinträchtigungen, insbesondere zu einer eingeschränkten Beweglichkeit des Gelenks 27, führen. Ebenso wird der Austritt von Schmierfett aus dem Gelenk 27 verhindert.

Der Dichtungsbalg besteht aus einem TPE-Werkstoff. Ein solcher Werkstoff ist im Wesentlichen gummielastisch, lässt sich aber dennoch in kurzen Zykluszeiten prozesssicher, schnell und einfach verarbeiten, was in wirtschaftlicher Hinsicht von hervorzuhebendem Vorteil ist.

Der Dichtungsbalg umfasst die beiden Stirnseiten 1, 2 sowie den Mantel 3, der in axialer Richtung 5 zwischen den Stirnseiten 1, 2 angeordnet ist. Der Dichtungsbalg umschließt die Mittelachse 4.

Der Mantel 3 ist in zwei Funktionsbereiche aufgeteilt, wobei einer der Funktionsbereiche das Torsionsausgleichselement 6 und der andere Funktionsbereich die umfangsseitig umlaufende und in sich geschlossen ausgebildete Falte 24 aufweist. Das Torsionsausgleichselement 6 und die Falte 24 sind in axialer Richtung 5 unmittelbar benachbart zueinander angeordnet. Das Torsionsausgleichselement 6 ist zur im Wesentlichen torsionsspannungsfreien Aufnahme von in den Dichtungsbalg eingeleiteten Torsionsbewegungen 7 vorgesehen, die Falte 24 kann Winkelbewegungen der miteinander verbundenen Maschinenelemente 25, 26 oder deren axiale Beweglichkeit relativ zueinander ausgleichen.
Die erste Stirnseite 1 des Dichtungsbalgs bildet die erste statische Dichtung 8, die zweite Stirnseite 2 die zweite statische Dichtung 9. Eine Relativbeweglichkeit zwischen den Stirnseiten 1, 2 und den Maschinenelementen 25, 26 findet also nicht statt.

Das Torsionsausgleichselement 6 hat eine Origami-Struktur 10 und umfasst Faltelemente 11, die durch Knicke 12 relativ beweglich miteinander verbunden sind. Durch die Relativbeweglichkeit der Faltelemente 11 und die Knicke 12 können in den Dichtungsbalg eingeleitete Torsionsbewegungen 7 in Umfangsrichtung 13 des Mantels 3 im Wesentlichen spannungsfrei aufgenommen werden.

Die Origami-Struktur 10 umfasst im gezeigten Ausführungsbeispiel zwei gedachte Radialebenen 17, 18, in denen jeweils die dreidimensionalen Grundformen 14 in Umfangsrichtung 13 benachbart zueinander angeordnet sind. Die Grundformen 14 sind in beiden Radialebenen 17, 18 übereinstimmend ausgebildet. Die Grundformen 14 in der ersten Radialebene 17 sind den Grundformen 14 in der zweiten Radialebene 18 - in Umfangsrichtung betrachtet - jeweils um eine halbe Grundform 14 versetzt zueinander zugeordnet. Dadurch weist die Origami-Struktur 10 besonders kompakte Abmessungen in axialer Richtung 5 auf und hat dennoch einen großen Faltbereich ± β, der im gezeigten Ausführungsbeispiel etwa -40° bis +40° beträgt.

Die Origami-Struktur 10 ist durch eine Vielzahl von Grundformen 14 gebildet, wobei die Grundformen 14 gemäß der Faltbedingung (A bis B) ≈ (B bis C) < (B bis D) gefaltet sind, wobei (A bis B) die axiale Breite 19 der Pyramide 15, (B bis C) die halbe Erstreckung 20 der Pyramide 15 am Außenumfang 21 des Dichtungsbalgs entlang und (B bis D) die Tiefe 22 der Pyramide 15 in Richtung der Mittelachse 4 vom Außenumfang 21 des Dichtungsbalgs bis zum Scheitelpunkt 16 der Pyramide 15 ist. Der Mantel 3 weist einen Faltbereich ± β auf, wobei β ein maximaler Torsionswinkel 23 in Umfangsrichtung 13, ausgehend von der herstellungsbedingten Geometrie des Dichtungsbalgs im unverformten Zustand, ist.

In den Figuren 2 und 3 ist der Dichtungsbalg aus Figur 1 jeweils als Einzelteil und in perspektivischer Darstellung gezeigt. Es ist zu erkennen, dass das Verhältnis aus axialer Länge des Dichtungsbalgs zu dessen Durchmesser im Wesentlichen 1 beträgt. Trotz der in axialer Richtung 5 sehr kompakten Abmessung, beträgt der Faltbereich β, wie zuvor bereits ausgeführt, etwa -40° bis +40° und ist damit beachtlich groß.

## Patentansprüche

1. Dichtungsbalg aus einem gummielastischen Werkstoff, umfassend eine erste (1) und eine zweite Stirnseite (2) sowie einen Mantel (3) mit einer Mittelachse (4), wobei der Mantel (3) in axialer Richtung (5) zwischen den Stirnseiten (1, 2) angeordnet ist und zumindest ein Torsionsausgleichselement (6) umfasst, zur im Wesentlichen torsionsspannungsfreien Aufnahme von in den Dichtungsbalg eingeleiteten Torsionsbewegungen (7) und wobei die erste Stirnseite (1) als erste statische Dichtung (8) und die zweite Stirnseite (2) als zweite statische Dichtung (9) ausgebildet ist, wobei der Dichtungsbalg aus einem TPE-Werkstoff besteht, wobei das Torsionsausgleichselement (6) eine Origami-Struktur (10) umfasst, mit Faltelementen (11), die durch Knicke (12) relativbeweglich miteinander verbunden sind, wobei die Faltelemente (11) bei in den Dichtungsbalg eingeleiteten Torsionsbewegungen (7) in Umfangsrichtung (13) des Mantels (3) im Wesentlichen spannungsfrei zueinander beweglich sind, wobei die Origami-Struktur (10) dreidimensionale Grundformen (14) mit den Faltelementen (11) umfasst, **dadurch gekennzeichnet, dass** jede der Grundformen (14) als eine konkave hexagonale Pyramide (15) ausgebildet ist, deren Scheitelpunkt (16) in Richtung der Mittelachse (4) des Dichtungsbalgs angeordnet ist, wobei die Grundformen (14) in einer gedachten ersten Radialebene (17) des Mantels (3) und in Umfangsrichtung (13) benachbart zueinander angeordnet sind und wobei axial benachbart zur gedachten ersten Radialebene (17) des Mantels (3) eine gedachte zweiten Radialebene (18) des Mantels (3) angeordnet ist, in der weitere dreidimensionale Grundformen (14) in Umfangsrichtung (13) benachbart zueinander angeordnet sind und wobei die Grundformen (14) in der ersten (17) und der zweiten gedachten Radialebene (18), in Umfangsrichtung (13) betrachtet, jeweils um eine halbe Grundform (14) versetzt zueinander angeordnet sind.

2. Dichtungsbalg nach Anspruch 1, **dadurch gekennzeichnet, dass** jede Grundform (14) gemäß einer Faltbedingung (A bis B) ≈ (B bis C) < (B bis D) gefaltet ist, wobei (A bis B) die axiale Breite (19) der Pyramide (15), (B bis C) die halbe Erstreckung (20) der Pyramide (15) am Außenumfang (21) des Dichtungsbalgs und (B bis D) die Tiefe (22) der Pyramide (15) in Richtung der Mittelachse (4) vom Außenumfang (21) des Dichtungsbalgs bis zum Scheitelpunkt (16) der Pyramide (15) ist und dass der Mantel (3) einen Faltbereich ± β aufweist, wobei β ein maximaler Torsionswinkel (23) in Umfangsrichtung (13), ausgehend von der herstellungsbedingten Geometrie des Dichtungsbalgs im unverformten Zustand, ist.

3. Dichtungsbalg nach Anspruch 2, **dadurch gekennzeichnet, dass** der Faltbereich ± β -40° bis +40° beträgt.

4. Dichtungsbalg nach einem der Ansprüche 1 bis 3, **dadurch gekennzeichnet, dass** der Mantel (3) zusätzlich zum Torsionsausgleichselement (6) zumindest eine umfangsseitig umlaufende und in sich geschlossenen ausgebildete Falte (24) aufweist und dass das Torsionsausgleichselement (6) und die Falte (24) in axialer Richtung (5) unmittelbar benachbart zueinander angeordnet sind.

5. Dichtungsanordnung, umfassend einen Dichtungsbalg nach einem der Ansprüche 1 bis 4 sowie ein erstes (25) und ein zweites Maschinenelement (26), die mittels eines Gelenks (27) schwenkbeweglich zueinander angeordnet sind, wobei die erste Stirnseite (1) des Dichtungsbalgs das erste Maschinenelement (25) mit ihrer statischen ersten Dichtung (8) und die zweite Stirnseite (2) des Dichtungsbalgs das zweite Maschinenelement (26) mit ihrer statischen zweiten Dichtung (9) statisch dichtend umschließt.

6. Dichtungsanordnung nach Anspruch 5, **dadurch gekennzeichnet, dass** das Gelenk (27) als Kugelzapfengelenk ausgebildet ist, umfassend einen Gelenksitz (28) und einen Kugelzapfen (29), der im Gelenksitz (28) aufgenommen ist und dass das erste Maschinenelement (25) durch den Gelenksitz (28) und das zweite Maschinenelement (26) durch den Kugelzapfen (29) gebildet ist.

## Claims

1. Seal bellows composed of a rubber-elastic material, comprising a first end side (1) and a second end side (2) and also a shell (3) with a central axis (4), wherein the shell (3) is arranged between the end sides (1, 2) in an axial direction (5) and comprises at least one torsion-compensating element (6) for the substantially torsional stress-free absorption of torsional movements (7) introduced into the seal bellows and wherein the first end side (1) is configured as a first static seal (8) and the second end side (2) is configured as a second static seal (9), wherein the seal bellows is composed of a TPE material, wherein the torsion-compensating element (6) comprises an origami structure (10), with folding elements (11) which are connected to one another by kinks (12) so as to be able to move relative to one another, wherein, in the case of torsional movements (7) introduced into the seal bellows, the folding elements (11) can be moved relative to one another in a circumferential direction (13) of the shell (3) in a substantially stress-free manner, wherein the origami structure (10) comprises three-dimensional basic forms (14) with the folding elements (11), **characterized in that** each of the basic forms (14) is configured as a concave hexagonal pyramid (15) whose apex (16) is arranged in the direction of the central axis (4) of the seal bellows, wherein the basic forms (14) are arranged in an imaginary first radial plane (17) of the shell (3) and adjacent to one another in the circumferential direction (13) and wherein an imaginary second radial plane (18) of the shell (3) is arranged axially adjacently with respect to the imaginary first radial plane (17) of the shell (3), further three-dimensional basic forms (14) being arranged adjacent to one another in the circumferential direction (13) in said second radial plane (18), and wherein the basic forms (14) in the first imaginary radial plane (17) and the second imaginary radial plane (18), as viewed in the circumferential direction (13), are arranged so as to be offset relative to one another in each case by half a basic form (14).

2. Seal bellows according to Claim 1, **characterized in that** each basic form (14) is folded in accordance with a folding condition (A to B) ≈ (B to C) < (B to D), wherein (A to B) is the axial width (19) of the pyramid (15), (B to C) is half the extent (20) of the pyramid (15) on the outer circumference (21) of the seal bellows and (B to D) is the depth (22) of the pyramid (15) in the direction of the central axis (4) from the outer circumference (21) of the seal bellows as far as the apex (16) of the pyramid (15), and **in that** the shell (3) has a folding range ± β, wherein β is a maximum torsional angle (23) in the circumferential direction (13), proceeding from the production-induced geometry of the seal bellows in the non-deformed state.

3. Seal bellows according to Claim 2, **characterized in that** the folding range ± β is -40° to +40°.

4. Seal bellows according to one of Claims 1 to 3, **characterized in that**, in addition to the torsion-compensating element (6), the shell (3) has at least one circumferential encircling fold (24) of self-contained configuration, and **in that** the torsion-compensating element (6) and the fold (24) are arranged immediately adjacent to one another in the axial direction (5).

5. Seal arrangement comprising a seal bellows according to one of Claims 1 to 4 and also a first machine element (25) and a second machine element (26) which are arranged so as to be pivotable relative to one another by means of a joint (27), wherein the first end side (1) of the seal bellows encloses the first machine element (25) in a statically sealing manner by way of its static first seal (8), and the second end side (2) of the seal bellows encloses the second machine element (26) in a statically sealing manner by way of its static second seal (9).

6. Seal arrangement according to Claim 5, **characterized in that** the joint (27) is configured as a ball pivot joint, comprising a joint seat (28) and a ball pivot (29) which is received in the joint seat (28), and **in that** the first machine element (25) is formed by the joint seat (28) and the second machine element (26) is formed by the ball pivot (29).

## Revendications

1. Soufflet d'étanchéité constitué d'une matière présentant l'élasticité du caoutchouc, comportant un premier (1) et un deuxième côté frontal (2) ainsi qu'une enveloppe (3) présentant un axe médian (4), dans lequel l'enveloppe (3) est disposée entre les côtés frontaux (1, 2) dans la direction axiale (5) et comporte au moins un élément de compensation de torsion (6), pour l'absorption sensiblement sans contraintes de torsion de mouvements de torsion (7) introduits dans le soufflet d'étanchéité, et dans lequel le premier côté frontal (1) est réalisé sous forme de premier joint d'étanchéité statique (8) et le deuxième côté frontal (2) est réalisé sous forme de deuxième joint d'étanchéité statique (9), dans lequel le soufflet d'étanchéité est constitué d'une matière TPE, dans lequel l'élément de compensation de torsion (6) comporte une structure de type origami (10), dotée d'éléments pliés (11), qui sont reliés les uns aux autres de manière mobile relativement par des pliures (12), dans lequel les éléments pliés (11) sont mobiles les uns par rapport aux autres sensiblement sans contraintes lorsque des mouvements de torsion (7) sont introduits dans le soufflet d'étanchéité dans la direction périphérique (13) de l'enveloppe (3), dans lequel la structure de type origami (10) comporte des formes de base tridimensionnelles (14) dotées des éléments pliés (11), **caractérisé en ce que** chacune des formes de base (14) est réalisée sous la forme d'une pyramide hexagonale concave (15) dont le sommet (16) est disposé dans la direction de l'axe médian (4) du soufflet d'étanchéité, les formes de base (14) étant disposées dans un premier plan radial imaginaire (17) de l'enveloppe (3) et de manière adjacente les unes aux autres dans la direction périphérique (13), et un deuxième plan radial imaginaire (18) de l'enveloppe (3) étant disposé de manière axialement adjacente au premier plan radial imaginaire (17) de l'enveloppe (3), deuxième plan radial dans lequel d'autres formes de base tridimensionnelles (14) sont disposées de manière adjacente les unes aux autres dans la direction périphérique (13), et les formes de base (14) dans le premier (17) et le deuxième plan radial imaginaire (18) étant disposées de manière décalée les unes par rapport aux autres respectivement d'une moitié de forme de base (14), vues dans la direction périphérique (13).

2. Soufflet d'étanchéité selon la revendication 1, **caractérisé en ce que** chaque forme de base (14) est pliée conformément à une condition de pliage (A à B) ≈ (B à C) < (B à D), où (A à B) est la largeur axiale (19) de la pyramide (15), (B à C) est la moitié de l'étendue (20) de la pyramide (15) au niveau de la périphérie extérieure (21) du soufflet d'étanchéité et (B à D) est la profondeur (22) de la pyramide (15) dans la direction de l'axe médian (4) à partir de la périphérie extérieure (21) du soufflet d'étanchéité jusqu'au sommet (16) de la pyramide (15), et **en ce que** l'enveloppe (3) présente une plage de pliage ± β, où β est un angle de torsion maximal (23) dans la direction périphérique (13), à partir de la géométrie, due à la fabrication, du soufflet d'étanchéité dans l'état non déformé.

3. Soufflet d'étanchéité selon la revendication 2, **caractérisé en ce que** la plage de pliage ± β est de -40° à +40°.

4. Soufflet d'étanchéité selon l'une des revendications 1 à 3, **caractérisé en ce que** l'enveloppe (3) comprend, en plus de l'élément de compensation de torsion (6), au moins un pli (24) s'étendant de manière périphérique et réalisé de manière fermée sur lui-même, et **en ce que** l'élément de compensation de torsion (6) et le pli (24) sont disposés de manière directement adjacente l'un à l'autre dans la direction axiale (5).

5. Ensemble d'étanchéité, comportant un soufflet d'étanchéité selon l'une des revendications 1 à 4 ainsi qu'un premier (25) et un deuxième élément de machine (26) qui sont disposés de manière mobile en pivotement l'un par rapport à l'autre au moyen d'un joint (27), dans lequel le premier côté frontal (1) du soufflet d'étanchéité entoure de manière statiquement étanche le premier élément de machine (25) par son premier joint d'étanchéité statique (8) et le deuxième côté frontal (2) du soufflet d'étanchéité entoure de manière statiquement étanche le deuxième élément de machine (26) par son deuxième joint d'étanchéité statique (9).

6. Ensemble d'étanchéité selon la revendication 5, **caractérisé en ce que** le joint (27) est réalisé sous forme de joint à pivot sphérique, comportant un siège de joint (28) et un pivot sphérique (29) qui est logé dans le siège de joint (28), et **en ce que** le premier élément de machine (25) est formé par le siège de joint (28) et le deuxième élément de machine (26) est formé par le pivot sphérique (29).
